# EUROPÄISCHE PATENTANMELDUNG

(11) **EP 2 081 364 A1**
(43) Veröffentlichungstag der Anmeldung: **22.07.2009**
(21) Anmeldenummer: 09150394.6
(22) Anmeldetag: 12.01.2009
(51) Int. Cl.: H04L 29/06

(54) **Verfahren, System und Server zum Datenaustausch**

(30) Priorität: 11.01.2008 DE 102008004200
(71) Anmelder: Arendus GmbH & Co. KG, 93049 Regensburg (DE)
(72) Erfinder: Schlott, Martin, 94116 Hutthurm (DE)
(74) Vertreter: Benninger, Johannes

(57) **Zusammenfassung**

Die vorliegende Erfindung betrifft ein Verfahren, ein System und einen Server zum Austausch von Daten zwischen einem mobilen Endgerät und einem Computer oder zum Austausch von Daten zwischen zwei mobilen Endgeräten.

Das Verfahren dient zum Austausch von Daten zwischen zwei Endgeräten, einem Sendegerät und einem Empfangsgerät; über ein Kommunikationsnetz und einen Vermittlungs-Server, und umfasst folgende Schritte:
- Bereitstellen der zu sendenden Daten auf dem Sendegeräts;
- Kontaktieren des Vermittlungs-Servers durch das Sendegerät über das Netzwerk, um eine Datenverbindung aufzubauen;
- Zuteilen einer Identifikationsnummer für die Datenverbindung durch den Vermittlungs-Server und Übertragen dieser Identifikationsnummer an das Sendegerät;
- Kontaktieren des Vermittlungs-Servers durch das Empfangsgerät über das Netzwerk, um die Datenverbindung aufzubauen;
- Abfragen und Überprüfen der zugeteilten Identifikationsnummer am Empfangsgerät; und
- nach korrekter Bestätigung der Identifikationsnummer durch das Empfangsgerät, Initiieren des Aufbaus einer Datenverbindung zwischen dem Sendegerät und dem Empfangsgerät durch den Vermittlungs-Server.

## Beschreibung

Die vorliegende Erfindung betrifft ein Verfahren, ein System und einen Server zum Austausch von Daten zwischen einem mobilen Endgerät und einem Computer oder zum Austausch von Daten zwischen zwei mobilen Endgeräten.

Üblicher Weise wird ein Austausch von Daten (z.B. Fotos oder Nachrichten) zwischen zwei Mobiltelefonen dadurch realisiert, dass mittels serieller Schnittstelle wie Bluetooth (Funkübertragung) oder IrDA (Infrarot-Datenübertragung) eine Datenverbindung zwischen den beiden Mobilgeräten aufgebaut wird. Dabei müssen allerdings an beiden Endgeräten erst die entsprechenden Verbindungen eingerichtet werden. Sollen Daten gleichzeitig oder zeitversetzt an mehrere Empfänger übertragen werden, muss der Verbindungsaufbau für alle Empfänger wiederholt werden. Falls der Benutzer mit der Prozedur nicht vertraut ist, können sich in diesem Zusammenhang leicht Fehler einschleichen. So kann es bspw. leicht passieren, dass beide Mobiltelefone unbeabsichtigter Weise auch nach abgeschlossener Datenübertragung weiterhin verbunden bleiben. Ebenso stellen nicht alle mobilen Endgeräte zueinander passende und kompatible Schnittstellen wie bspw. Bluetooth o. dgl. zur Verfügung. Auch kann es vorkommen, dass ein Kommunikationsaufbau trotz vorhandener kompatibler Schnittstellen wie bspw. Bluetooth-Schnittstellen nicht zustande kommt, da sich die Geräte bspw. nicht gegenseitig erkennen und/oder initialisieren können.

Alternativ kann eine Datenübertragung zwischen zwei Mobiltelefonen auch durch Übertragung von sog. SMS (Short-Message-Service) oder von MMS (Multimedia-Messaging-Service) stattfinden. Dabei muss der Datenanbieter die Telefonnummer des Datenempfängers kennen. Der Datenempfänger erfährt dabei automatisch die Telefonnummer des Senders. Zudem muss der Datenanbieter den Vorgang für jeden Empfänger wiederholen.

Bekannt ist weiterhin eine Datenübertragung von Mobiltelefon zu Mobiltelefon per Email über das Internet. Hierzu ist es erforderlich, dass der Sender der Daten die Email-Adresse des Empfängers kennt.

Ein Austausch von Daten zwischen einem Mobiltelefon und einem Rechner wie bspw. einem sog. Desktop-Computer (auch Datensynchronisation) wird üblicherweise ebenfalls über eine serielle Datenverbindung, beispielsweise Bluetooth oder IrDA, oder per USB-Kabel realisiert. Dabei können grundsätzlich die gleichen Schwierigkeiten bei der Einrichtung der Datenverbindung auftreten wie bereits oben beschrieben. Eine Datensynchronisierung über ein öffentlich zugängliches Datennetz wie bspw. das Internet erfolgt üblicherweise über ein sog. SyncML-Protokoll. Dabei sind zwei Synchronisierungsvorgänge erforderlich. Zum einen müssen die Daten des Desktop-PCs mit dem SyncML-Server synchronisiert werden, so dass auf dem Server eine Kopie der Benutzerdaten vorliegt. Danach kann in einem zweiten Synchronisierungsschritt eine Datensynchronisierung zwischen dem Mobiltelefon und dem SyncML-Server vorgenommen werden, um anschließend mit dem Datenaustausch beginnen zu können.

Die US 2006/02 10 044 A1 offenbart ein Telefonkonferenzsystem, das zum Austausch von Daten zwischen einem Sendegerät und einem Empfangsgerät mittels eines Vermittlungsservers über ein Kommunikationsnetz vorgesehen ist. Dazu werden zu sendende Daten am Sendegerät bereitgestellt, um den durchzuführenden Konferenzruf zuvor z.B. auf einen Zeitpunkt festzulegen oder die Teilnehmer zu bestimmen und zu benachrichtigen. Dabei wird auch der Vermittlungsserver vom Sendegerät über das Kommunikationsnetz kontaktiert und eine Datenverbindung aufgebaut. Weiterhin teilt der Vermittlungsserver für die Datenverbindung eine Identifikationsnummer bzw. einen Passkey zu und überträgt diese/n an das Sendegerät. Auf das Vorliegen eines Kommunikationswunsches aufmerksam gemacht, kontaktiert das betreffende Empfangsgerät den Vermittlungsserver über das Kommunikationsnetz, um eine Datenverbindung aufzubauen. Zu diesem Zweck wird vom Vermittlungsserver die zugeteilte Identifikationsnummer abgefragt und überprüft. Nach korrekter Eingabe des Passkey bzw. der Identifikationsnummer wird der Aufbau der Datenverbindung zwischen dem Sendegerät und dem Empfangsgerät durch den Vermittlungsserver initiiert.

Aus der WO 2006/1 07 161 A1 ist ein Verfahren zur Übertragung von Daten zwischen Endgeräten über einen Vermittlungsserver bekannt, bei dem die Multimediadaten in einer MM-Box im Vermittlungsserver zwischengespeichert und mit Zugriffsrechten versehen werden.

Die US 2006/02 82 738 A1 beschreibt ein Verfahren zur Übertragung von Daten in Gestalt von MMS-Inhalten von einem Sender zu einem Empfänger, wobei die Nachrichten zwischengespeichert und zur Identifizierung markiert werden.

Ein vorrangiges Ziel der vorliegenden Erfindung besteht darin, ein vereinfachtes Verfahren zum Datenaustausch zwischen einer mobilen Applikation und einem Computer bzw. zwischen zwei mobilen Geräten bereitzustellen, sowie ein entsprechendes Datenübertragungssystem und einen Server.

Dieses Ziel wird erfindungsgemäß durch die in den beigefügten Patentansprüchen definierte technische Lehre erreicht. So betrifft die vorliegende Erfindung ein Verfahren zum Austausch von Daten zwischen wenigstens zwei Endgeräten, nämlich einem Sendegerät und einem Empfangsgerät. Der Datenaustausch erfolgt dabei über ein Kommunikationsnetz und einen Vermittlungs-Server. Das erfindungsgemäße Verfahren umfasst die nachfolgenden Schritte: zunächst werden die zu sendenden Daten auf dem Sendegeräts bereitgestellt, wonach der Vermittlungs-Server durch das Sendegerät über das Netzwerk kontaktiert wird, um eine Datenverbindung aufzubauen. Danach erfolgt das Zuteilen einer Identifikationsnummer für die Datenverbindung durch den Vermittlungs-Server und Übertragen dieser Identifikationsnummer an das Sendegerät. Weiterhin wird der Vermittlungs-Server durch das Empfangsgerät über das Netzwerk kontaktiert, um die Datenverbindung aufzubauen. Die zugeteilte Identifikationsnummer wird am Empfangsgerät abgefragt und überprüft. Nach korrekter Bestätigung der Identifikationsnummer durch das Empfangsgerät wird der Aufbau einer Datenverbindung zwischen dem Sendegerät und dem Empfangsgerät durch den Vermittlungs-Server initiiert. Auf diese Weise wird ein sehr einfaches und zuverlässiges Kommunikationsverfahren zum Datenaustausch zwischen mindestens zwei Endgeräten zur Verfügung gestellt.

Gemäß einer bevorzugten Ausführungsvariante des erfindungsgemäßen Verfahrens kann vorgesehen sein, dass die zugeteilte Identifikationsnummer lediglich solange im Speicher des Vermittlungs-Servers gehalten wird, bis eine Datenverbindung zwischen den Endgeräten hergestellt wurde. Zudem kann nach der Übertragung der Identifikationsnummer an das Sendegerät die Identifikationsnummer auf dem Display des Sendegeräts angezeigt werden.

Gemäß einer weiteren Ausführungsvariante des Verfahrens ordnet der Vermittlungs-Server nach Bestätigung der Identifikationsnummer durch das Empfangsgerät das Empfangsgerät dem Sendegerät zu, das die Verbindung mit der Identifikationsnummer initiiert hat. Wahlweise kann der Vermittlungs-Server vor der Zuordnung des Empfangsgeräts zum Sendegerät eine Bestätigungsanfrage auf dem Mobilgerät des Sendegeräts initiieren, so dass eine Verbindung der beiden Geräte nur dann ermöglicht wird, wenn diese Anfrage bestätigt wurde. Das Initiieren des Aufbaus einer Datenverbindung zwischen dem Sendegerät und dem Empfangsgerät durch den Vermittlungs-Server kann bspw. auf einfache Weise dadurch erfolgen, dass der Vermittlungs-Server die Netzwerkadresse des Empfangsgeräts an das Sendegerät übermittelt. Zudem kann es von Vorteil sein, mittels des Vermittlungs-Servers zudem auch die Netzwerkadresse des Sendegeräts an das Empfangsgerät zu übermitteln.

Gemäß einer weiteren Variante des erfindungsgemäßen Verfahrens kann der Datenanbieter mit einer zugewiesenen Identifikationsnummer Daten an mehrere Empfänger gleichzeitig oder nacheinander versenden.

Es kann vorgesehen sein, dass vor einer Initiierung einer Datenverbindung durch den Vermittlungs-Server vom Empfangsgerät eine Authentifizierung des Empfangsgerätes am Sendegerät stattfindet. Diese Authentifizierung kann bspw. dadurch realisiert werden, indem vom Empfangsgerät eine Authentifizierungsnummer erzeugt wird, die dem Vermittlungs-Server übermittelt wird und von diesem an das Sendegerät weitergeleitet wird. Dabei wird diese Authentifizierungsnummer vorzugsweise sowohl auf dem Display des Sendegeräts als auch auf dem Display des Empfangsgeräts angezeigt, um eine Authentifizierung durch Vergleich der Anzeigen zu ermöglichen.

Die Erfindung betrifft weiterhin ein System zum Austausch von Daten zwischen zwei Endgeräten, nämlich einem Sendegerät und einem Empfangsgerät, über ein Kommunikationsnetz und mittels eines Vermittlungs-Servers, wobei in dem System das Sendegerät dazu ausgelegt ist, zu sendende Daten auf dem Sendegerät bereitzustellen und den Vermittlungs-Server über das Netzwerk zu kontaktieren, um eine Datenverbindung aufzubauen. Das Empfangsgerät ist dazu ausgelegt, den Vermittlungs-Server über das Netzwerk zu kontaktieren, um die Datenverbindung aufzubauen. Der Vermittlungs-Server ist dazu ausgelegt, eine Identifikationsnummer für die Datenverbindung zuzuteilen und diese Identifikationsnummer an das Sendegerät zu übertragen und die zugeteilte Identifikationsnummer am Empfangsgerät abzufragen und zu überprüfen, sowie nach korrekter Bestätigung der Identifikationsnummer durch das Empfangsgerät den Aufbau einer Datenverbindung zwischen dem Sendegerät und dem Empfangsgerät zu initiieren. Wahlweise kann zumindest eines der Endgeräte ein Mobiltelefon und das andere Endgerät ein stationärer Computer sein. Es können jedoch auch beide Endgeräte jeweils Mobiltelefone sind.

Schließlich umfasst die vorliegende Erfindung einen Vermittlungs-Server zum Austausch von Daten zwischen Endgeräten, nämlich Sendegeräten und Empfangsgeräten, über ein Kommunikationsnetz, wobei der Vermittlungs-Server folgende Einzelkomponenten umfasst. Er umfasst eine Kommunikationseinheit zum Entgegennehmen einer Verbindungsanfrage von einem Sendegerät über das Kommunikationsnetz, mit welcher das Sendegerät eine Datenverbindung zu einem Empfangsgerät aufbauen möchte, sowie zum Entgegennehmen einer Verbindungsanfrage von einem Empfangsgerät über das Kommunikationsnetz, mit welcher das Empfangsgerät eine Datenverbindung zum Sendegerät aufbauen möchte. Zudem umfasst der Vermittlungs-Server eine Identifikationsnummernbestimmungseinheit zum Bestimmen einer Identifikationsnummer für eine Datenverbindung, die an das Sendegerät übertragen wird sowie einen Speicher zum Zwischenspeichern von Netzwerkadressen der Engeräte und Identifikationsnummern für Datenverbindungen. Er umfasst weiterhin eine Abfrageeinheit, um auf dem Empfangsgerät eine Abfrage der Identifikationsnummer zu initiieren und die am Empfangsgerät eingegebene Identifikationsnummer mit der zugeteilten Identifikationsnummer zu vergleichen und eine Verbindungsinitiierungseinheit, um nach korrekter Bestätigung der Identifikationsnummer durch ein Empfangsgerät, den Aufbau einer Datenverbindung zwischen dem jeweiligen Sendegerät und diesem Empfangsgerät zu initiieren.

Es kann vorgesehen sein, dass der Vermittlungs-Server eine logische Verknüpfung des Sendegeräts und des Empfangsgeräts vornimmt, indem er die Netzwerkadressen der beiden Endgeräte einander zugeordnet im Speicher ablegt. Es kann von Vorteil sein, wenn der Vermittlungs-Server der Netzwerkadressen der an einer Datenverbindung beteiligten Mobiltelefone und die hierfür reservierte Identifikationsnummer lediglich solange im Speicher hält, bis eine Datenverbindung zwischen dem Datenanbieter und dem Datenempfänger durch Austausch der jeweiligen Netzwerkadressen durch die Verbindungsinitiierungseinheit ermöglicht wurde. Wahlweise können die Netzwerkadressen der an einer Datenverbindung beteiligten Mobiltelefone und die hierfür reservierte Identifikationsnummer lediglich solange im Speicher gehalten werden, bis eine Datenverbindung zwischen dem Sendegerät und dem Empfangsgerät durch Austausch der jeweiligen Netzwerkadressen durch die Verbindungsinitiierungseinheit ermöglicht wurde.

Weiterhin kann vorgesehen sein, dass der Vermittlungs-Server eine logische Verknüpfung des Sendegeräts und des Empfangsgeräts erzeugt, indem er die Netzwerkadressen der beiden Endgeräte einander zugeordnet im Speicher ablegt.

Hinsichtlich der leichten Bedienbarkeit sind Vorteile gegeben, wenn die von der Identifikationsnummernbestimmungseinheit bestimmte Identifikationsnummer alphanumerisch gebildet ist. Zudem kann es von Vorteil sein, die Identifikationsnummern relativ kurz zu halten, so dass diese schnell in ein Endgerät eingegeben werden können.

Der Vermittlungs-Server kann wahlweise eine zusätzliche Registrierungseinheit zur Registrierung von Endgeräten aufweisen, mit deren Hilfe Gerätenummern von Endgeräten im Speicher abgelegt werden können, um auf diese Weise Endgeräte dauerhaft identifizieren zu können. Die Registrierungseinheit kann zudem vorteilhaft dazu genutzt werden, Daten des Gerätebesitzers wie beispielsweise ein Foto oder dergleichen im Speicher abzulegen, um diese bei Aufbau der Verbindung an die beteiligten Endgeräte zu senden und deren Anzeige auf den jeweiligen Displays zu initiieren.

### Beschreibung der Ausführungsbeispiele

Im Folgenden werden Ausführungsbeispiele der Erfindung unter Bezugnahme auf die beigefügten Zeichnungen beschrieben.

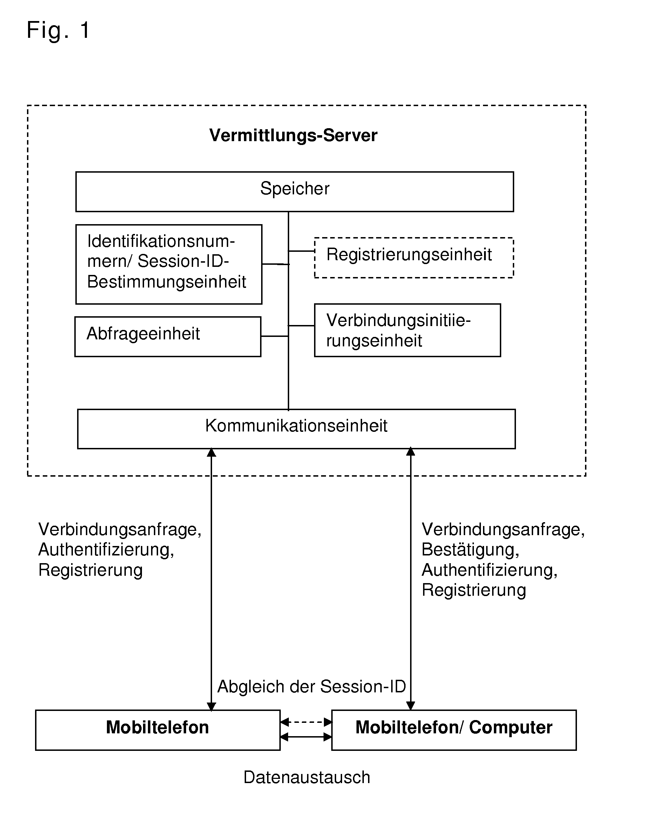

Fig. 1 zeigt einen prinzipiellen Aufbau eines Systems gemäß einem Ausführungsbeispiel der Erfindung, bei dem der Austausch von Daten zwischen zwei Mobiltelefonen bzw. einem Mobiltelefon und einem Computer stattfindet.
Fig. 2 zeigt ein Ausführungsbeispiel von in einem Speicher eines Vermittlungs-Servers gespeicherten Netzwerkadressen (hier IP-Adressen) von beteiligten Endgeräten mit jeweils zugeordneter Session-ID für zwei exemplarische Datenverbindungen.

Als erstes Ausführungsbeispiel der Erfindung wird nun der Austausch von Daten zwischen zwei mobilen Endgeräten, hier zwei Mobiltelefonen, beschrieben. Die Verbindung zwischen den beiden Mobiltelefonen wird dabei über einen Vermittlungs-Server hergestellt.

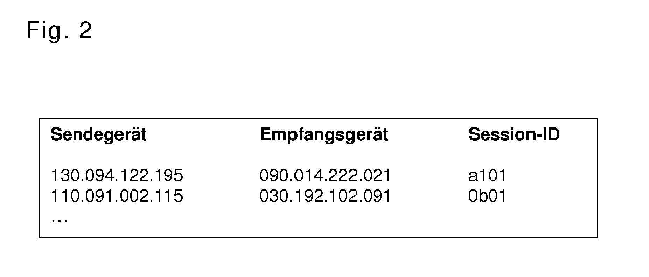

Die beiden Mobiltelefone verfügen jeweils über eine Verbindung zum Internet. D.h., jedem Mobiltelefon ist eine dynamische IP-Adresse zugeordnet. Der Datenanbieter stellt die bereitzustellenden Daten, z.B. Fotodateien, auf seinem Endgerät zusammen. Das Mobiltelefon des Datenanbieters kontaktiert den Vermittlungs-Server über die Internet-Verbindung und beantragt den Aufbau einer Datenverbindung. Der Vermittlungs-Server speichert die IP-Adresse des Mobiltelefons des Datenanbieters (z.B. "130.094.122.195" in Fig. 2) und reserviert eine Sitzungsnummer (Session-ID) als Identifikationsnummer für die beantragte Verbindung. Diese Session-ID kann z.B. eine alphanumerische Identifikationsnummer(z.B. "a101" in Fig. 2) sein, und teilt diese dem Datenanbieter über die Internet-Verbindung mit, z.B. indem die Session-ID auf dem Display des Mobiltelefons angezeigt wird. Der Datenanbieter teilt nun diese Session-ID dem Datenempfänger mit. Bevorzugter Weise geschieht dies verbal, da sich Datenanbieter und Datenempfänger meist am selben Ort befinden. Alternativ kann dies auch dadurch geschehen, dass das Mobilgerät des Datenempfängers mit einer eingebauten Digitalkamera ein digitales Abbild des Displays des Mobiltelefons des Datenanbieters erzeugt, und mittels z.B. eines Texterkennungsprogramms die Session-ID erkennt und auswertet. Der Datenempfänger kontaktiert mit seinem Mobiltelefon ebenfalls den Vermittlungs-Server und beantragt eine Entgegennahme der Verbindung. Der Vermittlungs-Server speichert die IP-Adresse des Mobiltelefons des Datenempfängers (siehe z.B. "090.014.222.021" in Fig. 2) und fordert den Datenempfänger zur Übermittlung einer Session-ID auf, beispielsweise indem auf dem Display des Mobiltelefons des Datenempfängers ein entsprechendes Eingabefeld dargestellt wird, oder indem eine mittels Bildschirmfoto und Texterkennung erkannte Session-ID abgefragt wird. Der Datenempfänger gibt nun die vom Datenanbieter übermittelte Session-ID ein, woraufhin der Vermittlungs-Server eine logische Verknüpfung zwischen dem Mobiltelefon des Datenanbieters und dem Mobiltelefon des Datenempfängers herstellen kann. Hierzu ordnet der Vermittlungs-Server die IP-Adresse des Mobiltelefons des Datenanbieters und die IP-Adresse des Mobiltelefons des Datenempfängers einander zu (siehe z.B. die erste Zeile in Fig. 2).

Nach Verknüpfung der Mobilgeräte initiiert der Vermittlungs-Server eine Bestätigungsanfrage auf dem Mobilgerät des Datenanbieters. D.h., auf dem Display des Mobiltelefons des Datenanbieters wird eine Mitteilung angezeigt, dass eine Datenabrufanfrage besteht. Bestätigt der Datenanbieter diese Datenabrufanfrage, so übermittelt der Vermittlungs-Server die zwischengespeicherte IP-Adresse des Datenempfängers dem Mobiltelefon des Datenanbieters und die zwischengespeicherte IP-Adresse des Datenanbieters dem Mobiltelefon des Datenempfängers, wodurch eine direkte Datenverbindung zwischen den Mobiltelefonen ermöglicht wird. Das Mobiltelefon des Datenanbieters sendet nun die Fotodateien direkt zum Mobiltelefon des Datenempfängers.

Der Vermittlungs-Server speichert die IP-Adressen der beteiligten Mobiltelefone und die reservierte Session-ID lediglich solange, bis eine direkte Datenverbindung zwischen dem Datenanbieter und dem Datenempfänger durch Austausch der jeweiligen IP-Adressen, wie oben beschrieben, ermöglicht wurde. Daraufhin kann der Vermittlungs-Server die freigegebene Session-ID sofort wieder für andere Datenanbieter verwenden. Auf diese Weise kann der Zeitraum, über den die Session-ID für eine Datenverbindung vom Vermittlungs-Server reserviert werden muss, sehr kurz gehalten werden. Dies hat den Vorteil, dass die Session-ID selbst kompakt gehalten werden kann. Z.B. kann es genügen, dass der Vermittlungs-Server für derartige Datenverbindungen vierstellige numerische Session-IDs 0000 bis 9999 vorsieht, was dem Vermittlungs-Server eine Verwaltung von maximal 10000 sich zeitlich überschneidenden Datenverbindungen verschiedener Datenanbieter ermöglicht. Dies hat für Datenanbieter und Datenempfänger den Vorteil, dass zum Aufbau einer Datenverbindung lediglich eine kurze Session-ID in das Mobiltelefon eingegeben werden muss.

Der Datenanbieter kann mit einer nach obigem Verfahren zugewiesenen Session-ID Daten auch an mehrere Empfänger gleichzeitig oder nacheinander versenden. In diesem Fall speichert der Vermittlungs-Server die IP-Adresse des Mobiltelefons des Datenanbieters und die reservierte Session-ID solange, bis der Datenanbieter die Internetverbindung zum Vermittlungs-Server beendet. Der Zeitraum der Gültigkeit der Session-ID ist damit zumindest auf den Zeitraum der Datenbereitstellung durch den Datenanbieter begrenzt.

Der Datenanbieter übermittelt die Session-ID, vorzugsweise verbal, an mehrere Datenempfänger, die jeweils eigenständig eine Datenempfangsanfrage an den Vermittlungs-Server richten, wie oben beschrieben wurde.

Optional kann bei dem Verfahren auch eine erweiterte Authentifizierung des Datenempfängers vorgenommen werden. Beispielsweise kann vor Austausch der IP-Adressen vom Mobiltelefon des Datenempfängers eine Authentifizierungs-ID erzeugt werden (z.B. eine Zufallszahl), die dem Vermittlungs-Server übermittelt wird. Der Vermittlungs-Server leitet diese Authentifizierungs-ID an das Mobiltelefon des Datenanbieters weiter. Diese Authentifizierungs-ID wird sowohl auf dem Display des Mobiltelefons des Datenanbieters, als auch auf dem Display des Mobiltelefons des Datenempfängers angezeigt. Der Datenanbieter kann durch Vergleich der angezeigten Authentifizierungs-IDs feststellen, ob die vom Vermittlungs-Server vermittelte Verknüpfung tatsächlich vom gewünschten Datenempfänger beantragt wurde, und nicht von einem Dritten, der die Session-ID abgehört hat oder zufällig zur Session-ID gelangt ist.

Alternativ zu einer Zufallszahl kann der Datenempfänger als Authentifizierungs-ID auch einen Namen oder ein Pseudonym zur Authentifizierung versenden. Bevorzugt benötigen die oben beschrieben Verfahren keinerlei Registrierung der beteiligten Personen bzw. Mobiltelefone beim Vermittlungs-Server; In anderen Worten, die Vermittlung der Datenverbindung mittels des Vermittlungs-Servers erfolgt anonym.

Datenanbieter und Datenempfänger erfahren voneinander lediglich die temporäre IP-Adresse. Auf die beschriebene Weise ist auch eine Anonymität des Datenanbieters gegenüber dem Datenempfänger und umgekehrt gewährleistet.

Statt der im obigen Beispiel genannten Fotodateien können wahlweise Daten beliebiger anderer Art übermittelt werden, z.B. Daten, die zwischen zwei Spieleapplikationen kommuniziert werden. Bei den verschiedenen Varianten des erfindungsgemäßen Verfahrens spielt es für den Vermittlungs-Server hierbei keine Rolle, wie lange die eigentliche Datenverbindung zwischen Datenanbieter und Datenempfänger aufrechterhalten wird, denn die Session-ID muss, wie oben bereits erläutert, nur solange vom Vermittlungs-Server vorgehalten werden, bis die direkte Datenverbindung zwischen Datenanbieter und Datenempfänger ermöglicht ist.

Für den Fall, dass die Mobiltelefone nicht in der Lage sind, eine direkte Verbindung einzugehen, bzw. falls dies aus bestimmten Gründen nicht erwünscht ist, kann der Vermittlungs-Server auch als Proxy-Server den Datentransfer zwischen Datenanbieter und Datenempfänger vornehmen.

Wenn in obigen Ausführungsbeispielen eine Registrierung bzw. Authentifizierung des Datenanbieters und des Datenempfängers beim Vermittlungs-Server nicht erforderlich ist, kann dies in anderen Anwendungen doch sinnvoll und notwendig sein, wie z.B. bei Banking-Applikationen und anderen bargeldlosen Bezahlvarianten.

Im Falle der Registrierung des Datenanbieters bzw. des Datenempfängers beim Vermittlungs-Server wird bei der Registrierung eine Geräte-ID, z.B. eine MAC-Adresse des jeweiligen Mobiltelefons, auf dem Server gespeichert. Dies ermöglicht bei der Verknüpfung des Mobiltelefons des Datenanbieters mit dem Mobiltelefon des Datenempfängers eine Authentifizierung der jeweiligen Mobiltelefone. D.h. bevor der Vermittlungs-Server die IP-Adressen der beteiligten Mobiltelefone austauscht, wird überprüft, ob das entsprechende Mobiltelefon für den geplanten Vorgang berechtigt ist. Hierzu wird beispielsweise vor Verknüpfung der Mobiltelefone die MAC-Adresse des jeweiligen Mobiltelefons abgefragt und mit den auf dem Vermittlungs-Server vorliegen Registrierungsdaten verglichen.

Um einen Missbrauch der Mobiltelefone durch Dritte auszuschließen, bzw. um Datenanbieter und Datenempfänger gegenseitig eindeutig zu identifizieren kann bei Registrierung am Vermittlungs-Server ein Foto des Benutzers hinterlegt werden. Der Vermittlungs-Server übermittelt diese Fotos bei Aufbau der Verbindung an die beteiligten Mobiltelefone und initiiert damit deren Anzeige auf dem Display. Dadurch wird beispielsweise dem Datenanbieter auf dessen Mobiltelefon ein Foto des Datenempfängers angezeigt, das dieser mit dem realen Datenempfänger vergleichen kann. Der Datenanbieter bestätigt die Authentifizierung des Datenempfängers nur bei einer Übereinstimmung des Fotos mit dem realen Datenempfänger. Gleichermaßen kann der Vermittlungs-Server eine Anzeige des Fotos des Datenanbieters auf dem Display des Mobiltelefons des Datenempfängers initiieren. Der Datenempfänger nimmt die Daten nur entgegen, wenn eine Übereinstimmung des Fotos mit dem realen Datenanbieter vorliegt.

In einem alternativen Ausführungsbeispiel sind Datenanbieter und Datenempfänger dieselbe Person. Dies ist beispielsweise bei der Synchronisierung von Daten auf verschiedenen Geräten desselben Benutzers der Fall. So ist es typischerweise wesentlich einfacher, Daten wie Adressdaten auf einem Desktop-Computer einzugeben, der über eine Tastatur und einen großen Bildschirm verfügt, als über die Zehnertastatur direkt in ein Mobiltelefon einzugeben. Zur Übertragung der Daten auf ein Mobiltelefon (bzw. Synchronisierung) kann das oben beschriebene Verfahren unter Einbezug des Servers dienen. Wie oben beschrieben kontaktieren beide Geräte den Server. Dadurch werden dem Server die IP-Adressen der Geräte bekannt. Auch hier ist wiederum eine namentliche Registrierung des Benutzers (hier Datenanbieter und Datenempfänger in einer Person) beim Vermittlungs-Server nicht zwingend erforderlich. Der Desktop-Computer beantragt den Aufbau einer Datenverbindung. Das Mobiltelefon beantragt eine Verbindungsentgegennahme. Der Vermittlungs-Server weist dem Benutzer eine Session-ID zu, die zum Desktop-Computer übertragen wird und auf dessen Display angezeigt wird. Der Vermittlungs-Server initiiert eine entsprechende Eingabeaufforderung auf dem Display des Mobiltelefons. Der Benutzer gibt nun die auf dem Display des Desktop-Computers angezeigte Session-ID in das Eingabeformular auf dem Mobiltelefon ein. Durch Abgleich der dem Desktop-Computer zugewiesenen Session-ID mit der am Mobiltelefon eingegebenen Session-ID kann der Vermittlungs-Server eine logische Verknüpfung zwischen dem Mobiltelefon und dem Desktop-Computer herstellen. Hierzu verknüpft der Vermittlungs-Server die IP-Adresse des Mobiltelefons mit der IP-Adresse des Desktop-Computers.

Nach Verknüpfung der beiden Geräte initiiert der Vermittlungs-Server eine Bestätigungsanfrage auf dem Desktop-Computer des Datenanbieters. D.h., auf dem Display des Desktop-Computers wird eine Mitteilung angezeigt, dass eine Datenabrufanfrage besteht. Bestätigt der Datenanbieter diese Datenabrufanfrage, so übermittelt der Vermittlungs-Server die zwischengespeicherte IP-Adresse des Mobiltelefons zum Desktop-Computer und die zwischengespeicherte IP-Adresse des Desktop-Computers zum Mobiltelefon, wodurch eine direkte Datenverbindung zwischen den Mobiltelefonen ermöglicht wird. Das Mobiltelefon des Datenanbieters führt nun eine Synchronisierung seiner Daten mit den Adressdaten des Desktop-Computers durch.

Da bei diesem Ausführungsbeispiel Datenanbieter und Datenempfänger dieselbe Person sind, könnte hier auf die Bestätigungsanfrage auch verzichtet werden.

Wenn auch in den hier beschriebenen Ausführungsbeispielen vom Austausch von IP-Adressen zur Verknüpfung der Geräte des Datenanbieters und des Datenempfängers gesprochen wird, ist dem Fachmann einsichtig, dass auch jede andere Übertragungsart hierfür geeignet ist. Ebenso ist dem Fachmann einsichtig, dass es sich bei den mobilen Endgeräten nicht um Mobiltelefone handeln muss, sondern auch andere mobile Geräte, wie beispielsweise ein mobiler MP3-Spieler mit WLAN-Verbindung oder PDAs als mobile Endgeräte in Frage kommen.

## Patentansprüche

1. Verfahren zum Austausch von Daten zwischen zwei Endgeräten, einem Sendegerät und einem Empfangsgerät; über ein Kommunikationsnetz und einen Vermittlungs-Server, wobei das Verfahren folgende Schritte umfasst:
- Bereitstellen der zu sendenden Daten auf dem Sendegeräts;
- Kontaktieren des Vermittlungs-Servers durch das Sendegerät über das Netzwerk, um eine Datenverbindung aufzubauen;
- Zuteilen einer Identifikationsnummer für die Datenverbindung durch den Vermittlungs-Server und Übertragen dieser Identifikationsnummer an das Sendegerät;
- Kontaktieren des Vermittlungs-Servers durch das Empfangsgerät über das Netzwerk, um die Datenverbindung aufzubauen;
- Abfragen und Überprüfen der zugeteilten Identifikationsnummer am Empfangsgerät; und
- nach korrekter Bestätigung der Identifikationsnummer durch das Empfangsgerät, Initiieren des Aufbaus einer Datenverbindung zwischen dem Sendegerät und dem Empfangsgerät durch den Vermittlungs-Server.

2. Verfahren nach Anspruch 1, wobei die zugeteilte Identifikationsnummer lediglich solange im Speicher des Vermittlungs-Servers gehalten wird, bis eine Datenverbindung zwischen den Endgeräten hergestellt wurde.

3. Verfahren nach Anspruch 1 oder 2, wobei nach der Übertragung der Identifikationsnummer an das Sendegerät die Identifikationsnummer auf dem Display des Sendegeräts angezeigt wird.

4. Verfahren nach einem der Ansprüche 1 bis 3, wobei der Vermittlungs-Server nach Bestätigung der Identifikationsnummer durch das Empfangsgerät das Empfangsgerät dem Sendegerät, das die Verbindung mit der Identifikationsnummer initiiert hat, zuordnet.

5. Verfahren nach Anspruch 4, wobei vor der Zuordnung des Empfangsgeräts zum Sendegerät der Vermittlungs-Server eine Bestätigungsanfrage auf dem Mobilgerät des Sendegeräts initiiert und eine Verbindung der beiden Geräte nur ermöglicht wird, wenn diese Anfrage bestätigt wird.

6. Verfahren nach einem der vorstehenden Ansprüche, wobei das Initiieren des Aufbaus einer Datenverbindung zwischen dem Sendegerät und dem Empfangsgerät durch den Vermittlungs-Server **dadurch** erfolgt, dass der Vermittlungs-Server die Netzwerkadresse des Empfangsgeräts an das Sendegerät übermittelt.

7. Verfahren nach Anspruch 6, wobei der Vermittlungs-Server zudem auch die Netzwerkadresse des Sendegeräts an das Empfangsgerät übermittelt.

8. Verfahren nach einem der vorstehenden Ansprüche, wobei der Datenanbieter mit einer zugewiesenen Identifikationsnummer Daten an mehrere Empfänger gleichzeitig oder nacheinander versendet.

9. Verfahren nach einem der vorstehenden Ansprüche, wobei vor Initiierung einer Datenverbindung durch den Vermittlungs-Server vom Empfangsgerät eine Authentifizierung des Empfangsgerätes am Sendegerät stattfindet.

10. Verfahren nach Anspruch 9, wobei die Authentifizierung realisiert wird, indem vom Empfangsgerät eine Authentifizierungsnummer erzeugt wird, die dem Vermittlungs-Server übermittelt wird und von diesem an das Sendegerät weitergeleitet wird, wobei diese Authentifizierungsnummer sowohl auf dem Display des Sendegeräts, als auch auf dem Display des Empfangsgeräts angezeigt wird, um eine Authentifizierung durch Vergleich der Anzeigen zu ermöglichen.

11. System zum Austausch von Daten zwischen zwei Endgeräten, nämlich einem Sendegerät und einem Empfangsgerät, über ein Kommunikationsnetz und mittels eines Vermittlungs-Servers, wobei in dem System:
- das Sendegerät dazu ausgelegt ist, zu sendende Daten auf dem Sendegerät bereitzustellen und den Vermittlungs-Server über das Netzwerk zu kontaktieren, um eine Datenverbindung aufzubauen;
- das Empfangsgerät dazu ausgelegt ist, den Vermittlungs-Server über das Netzwerk zu kontaktieren, um die Datenverbindung aufzubauen;
- der Vermittlungs-Server dazu ausgelegt ist, eine Identifikationsnummer für die Datenverbindung zuzuteilen und diese Identifikationsnummer an das Sendegerät zu übertragen und die zugeteilte Identifikationsnummer am Empfangsgerät abzufragen und zu überprüfen, sowie nach korrekter Bestätigung der Identifikationsnummer durch das Empfangsgerät den Aufbau einer Datenverbindung zwischen dem Sendegerät und dem Empfangsgerät zu initiieren.

12. Vermittlungs-Server zum Austausch von Daten zwischen Endgeräten, nämlich Sendegeräten und Empfangsgeräten, über ein Kommunikationsnetz, wobei der Vermittlungs-Server umfasst:
- eine Kommunikationseinheit zum Entgegennehmen einer Verbindungsanfrage von einem Sendegerät über das Kommunikationsnetz, mit welcher das Sendegerät eine Datenverbindung zu einem Empfangsgerät aufbauen möchte, sowie zum Entgegennehmen einer Verbindungsanfrage von einem Empfangsgerät über das Kommunikationsnetz, mit welcher das Empfangsgerät eine Datenverbindung zum Sendegerät aufbauen möchte;
- eine Identifikationsnummernbestimmungseinheit zum Bestimmen einer Identifikationsnummer für eine Datenverbindung, die an das Sendegerät übertragen wird;
- einen Speicher zum Zwischenspeichern von Netzwerkadressen der Engeräte und Identifikationsnummern für Datenverbindungen;
- eine Abfrageeinheit, um auf dem Empfangsgerät eine Abfrage der Identifikationsnummer zu initiieren und die am Empfangsgerät eingegebene Identifikationsnummer mit der zugeteilten Identifikationsnummer zu vergleichen;
- eine Verbindungsinitiierungseinheit, um nach korrekter Bestätigung der Identifikationsnummer durch ein Empfangsgerät, den Aufbau einer Datenverbindung zwischen dem jeweiligen Sendegerät und diesem Empfangsgerät zu initiieren.

13. Vermittlungs-Server nach Anspruch 12, der eine logische Verknüpfung des Sendegeräts und des Empfangsgeräts vornimmt, indem er die Netzwerkadressen der beiden Endgeräte einander zugeordnet im Speicher ablegt.

14. Vermittlungs-Server nach Anspruch 12 oder 13, der Netzwerkadressen der an einer Datenverbindung beteiligten Mobiltelefone und die hierfür reservierte Identifikationsnummer lediglich solange im Speicher hält, bis eine Datenverbindung zwischen dem Sendegerät und dem Empfangsgerät durch Austausch der jeweiligen Netzwerkadressen durch die Verbindungsinitiierungseinheit ermöglicht wurde.

15. Vermittlungs-Server nach einem der Ansprüche 12 bis 14, der zudem eine Registrierungseinheit zur Registrierung von Endgeräten aufweist, um Gerätenummern von Endgeräten im Speicher abzulegen, so dass Endgeräte dauerhaft identifiziert werden können.
